# EUROPEAN PATENT APPLICATION

(11) **EP 4 742 062 A1**
(43) Date of publication of application: **13.05.2026**
(21) Application number: 25213592.6
(22) Date of filing: 05.11.2025
(51) Int. Cl.: G06F 18/2433, G06V 10/764, G06V 10/774, G06V 10/98, G06V 20/52, G06V 20/64

(54) **TRAINING IMAGE STORAGE DEVICE AND PRODUCT RETRIEVAL DEVICE**

(30) Priority: 07.11.2024 JP 2024195380
(71) Applicant: Ishida Co., Ltd., Kyoto-shi Kyoto 606-8392 (JP)
(72) Inventor: TATEISHI, Keita, Ritto-shi, Shiga, 520-3026 (JP); NONOHARA, Yasunari, Ritto-shi, Shiga, 520-3026 (JP); IWAKAWA, Ken, Ritto-shi, Shiga, 520-3026 (JP)
(74) Representative: Global IP Europe Patentanwaltskanzlei

(57) **Abstract**

A training image storage device that stores training images for learning of an image related to an article, the training image storage device includes: an imaging unit configured to capture an image of the article; a determination unit configured to determine whether a captured image of the article is an outlier image; and a storage unit configured to store at least a part of the captured images as a training image. The determination unit determines whether the captured image is the outlier image based on a trained model related to the article and features of the captured image. The storage unit stores, as the training image, the captured image that is determined not to be the outlier image among a plurality of the captured images.

## Description

### TECHNICAL FIELD

The present disclosure relates to a training image storage device and a product retrieval device.

### BACKGROUND

Japanese Patent Publication No. 7368834 describes a technique in which, in an article processing apparatus, when a new article is conveyed by a conveyance unit and when characteristics of an article change such that a pre-configured trained model becomes difficult to handle the article, teacher data related to the article is automatically collected by storing an image of the article in association with article information.

When automatically collecting training images (for example, teacher data) related to articles as in the related art described above, it is desirable to remove outlier images containing noise from a large number of images including an article.

However, when there are a large number of images including articles, it is not easy for an operator to determine whether an image is an outlier image.

The present disclosure provides a training image storage device and a product retrieval device that are capable of storing, as training images, captured images obtained by automatically removing outlier images including noise from a plurality of captured images.

### SUMMARY

(1) A training image storage device according to an aspect of the present disclosure is a training image storage device that stores training images for learning of an image related to an article, the training image storage device includes: an imaging unit configured to capture an image of the article; a determination unit configured to determine whether a captured image of the article is an outlier image; and a storage unit configured to store at least a part of the captured images as a training image. The determination unit determines whether the captured image is the outlier image based on a pre-configured trained model related to the article and features of the captured image. The storage unit stores, as the training image, the captured image that is determined not to be the outlier image among a plurality of the captured images.
   In the training image storage device according to the aspect of the present disclosure, the determination unit determines whether the captured image is an outlier image based on the trained model related to the article and the features of the captured image. The storage unit stores, as the training image, the captured image that is determined not to be an outlier image among a plurality of the captured images. Thus, for example, each time the article is imaged by the imaging unit, the captured image determined not to be an outlier image is automatically and sequentially stored as the training image. Therefore, according to the training image storage device of the aspect of the present disclosure, captured images obtained by automatically removing outlier images including noise from a plurality of captured images can be stored as training images.
(2) In the above-described (1), the determination unit may determine that the captured image is the outlier image when an outlier score calculated based on the trained model and the features of the captured image is equal to or greater than a predetermined outlier determination threshold. The determination unit may calculate the outlier score to be smaller as a capturing time of the captured image is more recent. In this case, the more recent the capturing time of the captured image, the less likely the captured image is to be determined to be an outlier image. This can suppress erroneously determining a captured image that does not actually include noise as an outlier image when only a part of the article has been changed to the latest specification, for example.
(3) In the above-described (1) or (2), the determination unit may determine that the captured image is the outlier image based on a result of a comparison between an outlier score calculated based on the trained model and the features of the captured image, and a predetermined outlier determination threshold. The outlier determination threshold may be a value of the outlier score which results in a predetermined ratio of the captured images among the captured images being determined as outliers. In this case, for example, when an outlier occurrence rate at which a plurality of captured images include noise is known in advance, the outlier determination threshold can be automatically set.
(4) A product retrieval device according to another aspect of the present disclosure includes: the training image storage device according to the above-described (1) or (2); an imaging unit configured to capture an image of a product; a product information storage unit configured to store product information related to a type of the product; and a retrieval unit configured to retrieve the product information. The retrieval unit may identify the type of the product by applying features of a captured image of the product to the trained model that has been trained using the training images, and retrieve the product information corresponding to the identified type of the product. In this case, for example, each time the product is imaged by the imaging unit, the captured image determined not to be an outlier image is automatically and sequentially stored as the training image. In addition, the type of the product can be identified using the trained model that has been trained using the training images.

According to some aspects of the present disclosure, captured images obtained by automatically removing outlier images including noise from a plurality of captured images can be stored as training images.

### BRIEF DESCRIPTION OF THE DRAWINGS

FIG. 1 is an external perspective view illustrating a weighing-packaging apparatus including a training image storage device and a product retrieval device according to an example.
FIG. 2 is a block diagram illustrating a configuration of the training image storage device and the product retrieval device according to the example.
FIG. 3A is a diagram illustrating a plurality of learning-candidate captured images with different capturing times.
FIG. 3B is a diagram illustrating an example of an outlier score.
FIG. 3C is a diagram illustrating a determination result when the example of the outlier score is used.
FIG. 4A is a diagram re-illustrating the learning-candidate captured images of FIG. 3A.
FIG. 4B is a diagram illustrating another example of the outlier score.
FIG. 4C is a diagram illustrating a determination result when another example of the outlier score is used.
FIG. 5A is a time-series graph illustrating the outlier score when a capturing time is time t2.
FIG. 5B is a time-series graph illustrating the outlier score when the capturing time is time t4 after time t2.
FIG. 6 is a flowchart for explaining a processing operation of the training image storage device.
FIG. 7 is a flowchart for explaining a processing operation of the weighing-packaging apparatus including the product retrieval device.

### DETAILED DESCRIPTION

Hereinafter, an example will be described in detail with reference to the accompanying drawings. In the description of the drawings, the same or corresponding elements are denoted by the same reference signs, and redundant description is omitted.

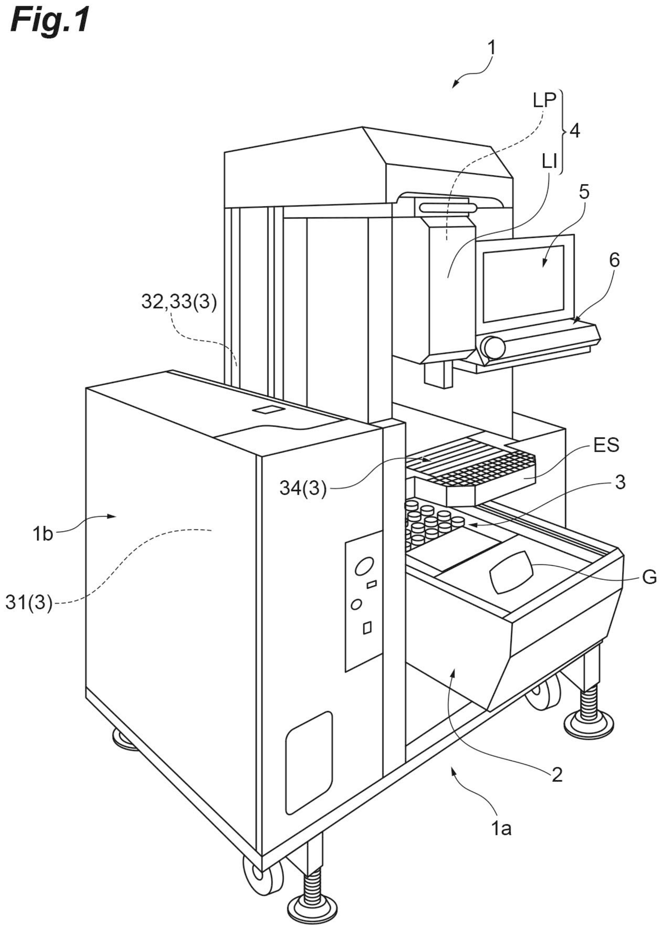

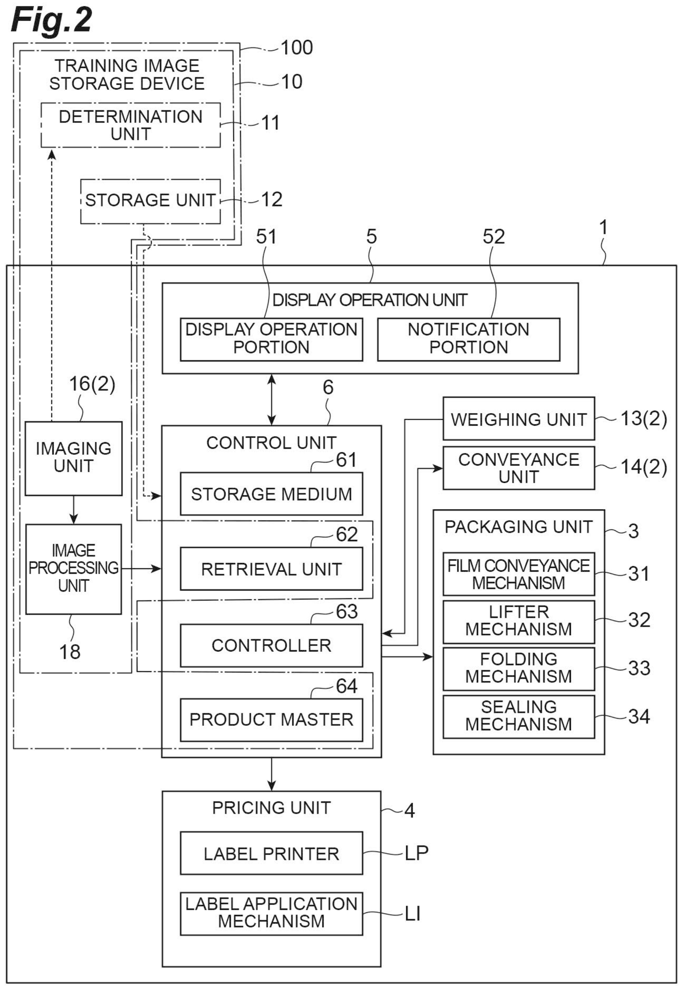

A weighing-packaging apparatus 1 illustrated in FIGS. 1 and 2 is an apparatus that performs weighing and packaging of a product G (an article). The weighing-packaging apparatus 1 is configured as a weighing, packaging, and pricing apparatus by incorporating a pricing unit 4, described later. The product G is an article that is weighed, packaged, and priced by the weighing-packaging apparatus 1. The product G has, for example, an article such as a food product, and a container on which the article is placed or in which the article is stored. When the product G is an article stored in a container, both the article and the container may be packaged by the weighing-packaging apparatus 1.

The weighing-packaging apparatus 1 includes a weighing and infeed mechanism 2, a packaging unit 3, a pricing unit 4, a display operation unit 5, and a control unit 6. Each mechanism included in the weighing-packaging apparatus 1 is housed, for example, in a main body 1a of the weighing-packaging apparatus 1 and a casing 1b in which a film roll and the like are stored.

The weighing and infeed mechanism 2 has a weighing unit 13, a conveyance unit 14, and an imaging unit 16. The weighing unit 13 is a weighing device that weighs the product G, and outputs a weighing result (a weighed value) of the product G to the control unit 6. The control unit 6 calculates a net weight of the product G by subtracting a tare weight of a container or the like from the weighed value in a stable state. The control unit 6 outputs an imaging command to the imaging unit 16. The weighing unit 13 has a placement unit (not shown) such as a weighing pan on which the product G is placed.

The conveyance unit 14 is a member that conveys the product G placed on the weighing unit 13 to the packaging unit 3, and includes, for example, a pusher conveyor, a belt conveyor, or the like. The conveyance unit 14 conveys, for example, the product G placed on the weighing unit 13 to a rear side. Thereby, the product G is sent to a lifter mechanism 32 (described later) of the packaging unit 3.

The imaging unit 16 captures an image of the product G placed on the weighing unit 13 and acquires a captured image of the product G. The imaging unit 16 is, for example, a CCD camera, a CMOS camera, or the like. The imaging unit 16 is attached, for example, to a bottom surface of a discharge table ES, above a place where the product G of the weighing unit 13 is placed. The captured image acquired by the imaging unit 16 is output to a training image storage device 10 or an image processing unit 18.

The training image storage device 10 is a device that stores training images for learning of an image related to the product G. The training image storage device 10 is connected directly or indirectly to the weighing-packaging apparatus 1. When the training image storage device 10 is indirectly connected to the weighing-packaging apparatus 1, for example, the training image storage device 10 and the weighing-packaging apparatus 1 are connected via Ethernet (registered trademark) or the like. In this case, the training image storage device 10 may be a cloud computer or the like arranged at a location different from the weighing-packaging apparatus 1. In the example of FIG. 2, the training image storage device 10 is a device separate from the weighing-packaging apparatus 1, but may be built in the weighing-packaging apparatus 1.

The training image storage device 10 acquires features (hereinafter, referred to as "first features") indicating characteristics of a subject included in a captured image (hereinafter, referred to as a "learning-candidate captured image") of a learning-candidate product, which is a product G captured for learning of an image related to the product G. The subject of the learning-candidate captured image is not limited to the product G, and may include an object other than the product G captured by the imaging unit 16. The training image storage device 10 acquires the first features including characteristics of the learning-candidate product. The first features include, for example, characteristics of the article itself, characteristics of a container on which the object is placed, and characteristics of an object other than the learning-candidate product, and the like. The characteristics of the article itself are, for example, a shape for each area distinguished by color, an area ratio, a color tone of each area, and the like. The characteristics of the container include characteristics such as a size, a shape, and a color of the container. The characteristics of the object other than the product G include features that contribute to noise in machine learning, such as a situation where an object of another product G is captured, a situation where an object such as a user's hand and scissors is captured, and a situation where at least a part of the product G is not captured. The first features may be, for example, a vector including a predetermined number of numbers obtained via a neural network corresponding to a feature extraction layer of the trained model related to the article.

The training image storage device 10 has, as a functional configuration, a determination unit 11 and a storage unit 12. The determination unit 11 determines whether the learning-candidate captured image is an outlier image based on the trained model related to the article and the first features of the learning-candidate captured image. The trained model related to the article is a prediction model generated by machine learning for each article related to the learning-candidate captured image, and is an inference program in which parameters (trained parameters) obtained as a result of machine learning are incorporated. The storage unit 12 stores at least a part of the learning-candidate captured images as a training image. The storage unit 12 stores, as the training image, the learning-candidate captured image that is determined not to be the outlier image among a plurality of the learning-candidate captured images. The functions of the determination unit 11 and the storage unit 12 are realized, for example, by one or more processors executing a program stored in a memory. Alternatively, these functional units may be dedicated hardware circuits configured to execute each function.

The trained model is generated in advance by machine learning from past captured images, and can be updated by machine learning using newly captured learning-candidate captured images. As the learning-candidate captured image used for updating the trained model, it is desirable to use a normal image that does not include features that become noise in machine learning, instead of an outlier image that includes features that become noise in machine learning. If an object other than the learning-candidate product as described above is included in the learning-candidate captured image, it can become noise for machine learning. When the number of learning-candidate captured images becomes very large, it becomes practically difficult for a user to visually determine whether the learning-candidate captured image is an outlier image.

Therefore, the determination unit 11 determines, for example, whether each of a plurality of learning-candidate captured images is an outlier image based on the trained model generated up to the capturing of the learning-candidate captured image and the first features of each of the plurality of learning-candidate captured images captured after the generation or update of the trained model.

The determination unit 11 acquires, for example, the first features of the subject from each of the plurality of learning-candidate captured images. The determination unit 11 calculates an outlier score based on the trained model generated up to the capturing of the learning-candidate captured image and the first features of the learning-candidate captured image. The outlier score is an index for determining whether the learning-candidate captured image is an outlier image. The determination unit 11, for example, applies the acquired first features to the trained model related to the product G that is a target of learning, and calculates an outlier score for each of the plurality of learning-candidate products using an outlier detection algorithm as a separation layer. The outlier score is calculated such that the product is normal when the outlier score is less than an outlier determination threshold, and the product is not normal (is an outlier) when the outlier score is equal to or greater than the outlier determination threshold.

The determination unit 11 determines, for example, that the captured image is an outlier image when an outlier score calculated based on the trained model and the first features of the learning-candidate captured image is equal to or greater than a predetermined outlier determination threshold. The outlier determination threshold is a threshold of the outlier score for determining whether the learning-candidate captured image is an outlier image. As an example, the determination unit 11 may set the outlier determination threshold using a predetermined parameter. For example, the outlier determination threshold may be 0. In this case, the determination unit 11 determines that the learning-candidate captured image is an outlier image when the calculated outlier score is equal to or greater than 0.

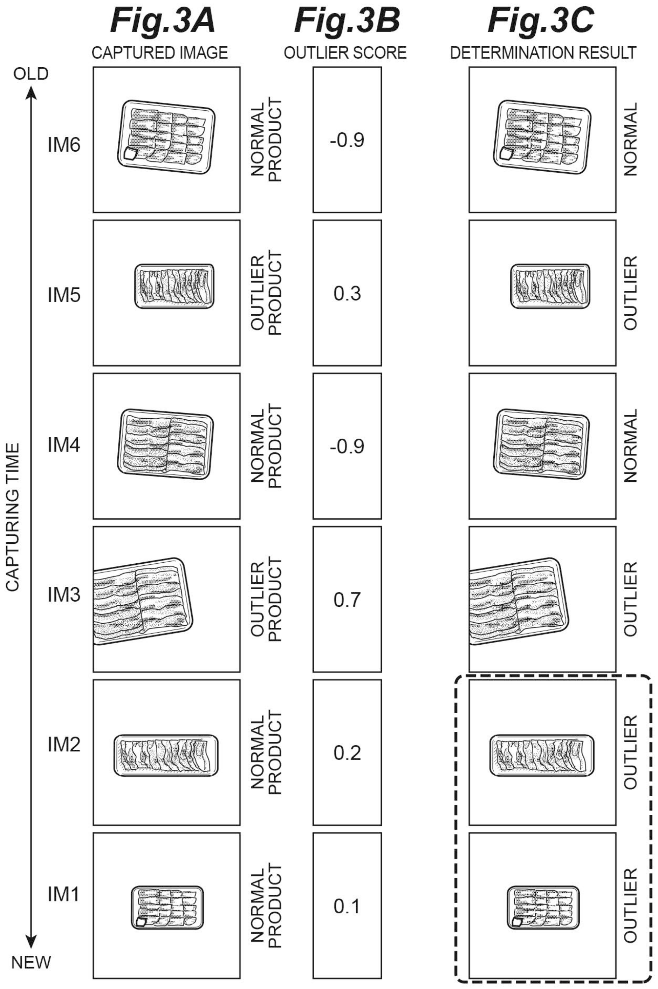

FIG. 3A illustrates, as a plurality of learning-candidate captured images with different capturing times, learning-candidate captured images IM1 to IM6 in order from the most recent capturing time to the oldest capturing time. In the example of FIG. 3A, a product (for example, fresh meat placed on a tray) captured in the learning-candidate captured image IM6 with the oldest capturing time is in a state without an outlier (in a normal state) at an old capturing time. In the learning-candidate captured image IM5, the captured product is a product different from that in the learning-candidate captured image IM6, and is in a state with an outlier (the image is an outlier image) at the time when the learning-candidate captured image IM5 was captured. In the learning-candidate captured image IM4, the captured product is the same as that in the learning-candidate captured image IM6, and is in a state without an outlier. In the learning-candidate captured image IM3, the captured product is the same as that in the learning-candidate captured image IM6, but is in a state with an outlier as a learning-candidate captured image because a part of the product is not captured.

FIG. 3B illustrates outlier scores corresponding to the learning-candidate captured images IM1 to IM6 of FIG. 3A. The outlier scores corresponding to the learning-candidate captured images IM3 to IM6 are calculated as 0.7, -0.9, 0.3, and -0.9, respectively. As shown in FIG. 3C, when the outlier determination threshold is 0, the determination unit 11 determines that the learning-candidate captured images IM4 and IM6 for which the calculated outlier score is less than 0 are normal images, and determines that the learning-candidate captured images IM3 and IM5 for which the calculated outlier score is equal to or greater than 0 are outlier images.

In this way, the determination unit 11 automatically determines whether the learning-candidate captured image is an outlier image based on the trained model related to the product G and the first features of the learning-candidate captured image. The storage unit 12 automatically stores, as a training image, the learning-candidate captured image that is determined not to be an outlier image among the plurality of learning-candidate captured images. Therefore, even if the number of learning-candidate captured images becomes very large, non-outlier training images can be automatically stored in the storage unit 12 as training images, omitting the user's visual determination of whether the learning-candidate captured image is an outlier image.

Here, even when an object other than the product G as described above is not included in the learning-candidate captured image, for example, when the specification of the product G has just been changed, if the outlier score calculated based on the trained model and the first features of the learning-candidate captured image is used as it is, the learning-candidate captured image may be erroneously determined to be an outlier image. Examples of changes in the specification of the product G include a change in the shape or size of a container on which the article is placed or in which the article is stored, a change in the arrangement of the article in the container, a change in the color of the article, and the like.

For example, in the example of FIG. 3A, it is assumed that for the product captured in the learning-candidate captured image IM1 with the most recent capturing time, only the color of the tray is changed compared to the product in the learning-candidate captured image IM6. It is assumed that for the product captured in the next most recent learning-candidate captured image IM2, the shape of the tray is changed to be longer in a longitudinal direction and the arrangement of the fresh meat is changed, compared to the product in the learning-candidate captured image IM6. When calculated based on the trained model and the first features of the learning-candidate captured image, as shown in FIG. 3B, the outlier scores are calculated as 0.1 and 0.2, respectively, and are equal to or greater than 0. In this case, if the outlier scores are used as they are, the learning-candidate captured images IM1 and IM2 are actually in a state without an outlier at the time of capturing, but as shown in FIG. 3C, the determination unit 11 erroneously determines that the learning-candidate captured images IM1 and IM2 are outlier images.

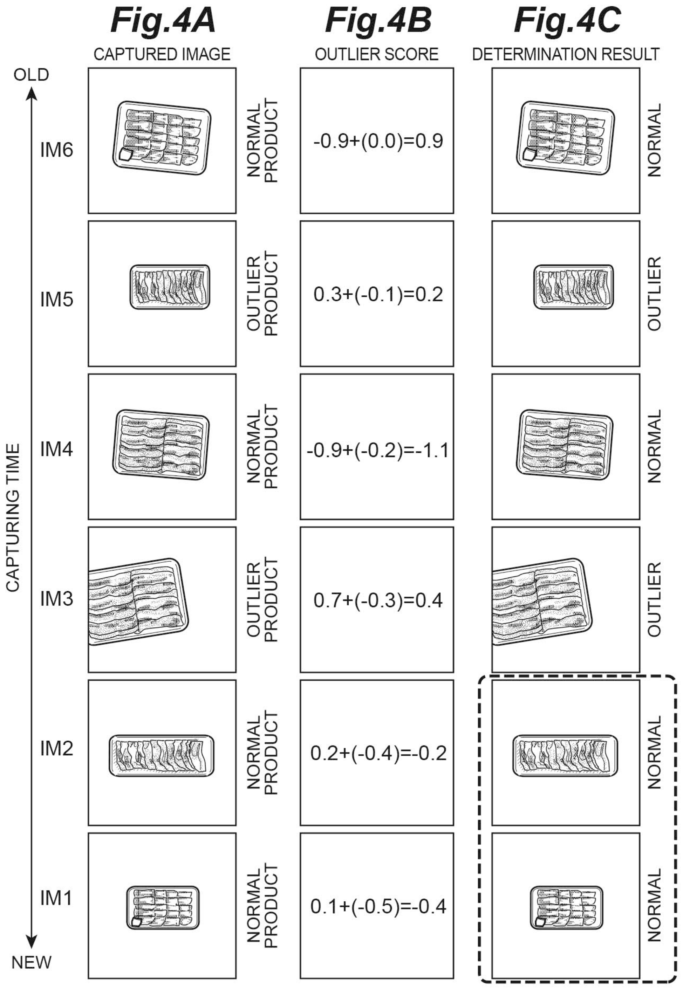

Therefore, the determination unit 11 calculates an outlier score correction value to be smaller as the capturing time of the learning-candidate captured image is more recent. The outlier score correction value is a weighting value of the outlier score that takes into account that a learning-candidate captured image is less likely to be an outlier image as its capturing time is more recent. The determination unit 11 uses the calculated outlier score correction value to calculate a corrected outlier score that is corrected according to the capturing time. FIG. 4B illustrates, as another example of the outlier score, corrected outlier scores corresponding to the learning-candidate captured images IM1 to IM6 of FIG. 4A on the right side. The corrected outlier score is, for example, a sum of the outlier score before correction shown in FIG. 3B and the outlier score correction value.

In the example of FIG. 4B, the outlier score correction value is given as -0.5 for the learning-candidate captured image IM1 with the most recent capturing time. The outlier score correction value is given as -0.4 for the learning-candidate captured image IM2, -0.3 for the learning-candidate captured image IM3, -0.2 for the learning-candidate captured image IM4, -0.1 for the learning-candidate captured image IM5, and 0.0 for the learning-candidate captured image IM6, as the capturing time becomes sequentially older. By correcting the outlier score in this way, as shown in FIG. 4C, the determination unit 11 is enabled to determine that the learning-candidate captured images IM1 and IM2 are not outlier images (are normal images). Therefore, erroneous determination that the learning-candidate captured images IM1 and IM2 are outlier images can be suppressed even for the learning-candidate captured images IM1 and IM2 with recent capturing times. The learning-candidate captured images IM1 and IM2 can be automatically stored in the storage unit 12 as suitable (non-outlier) training images.

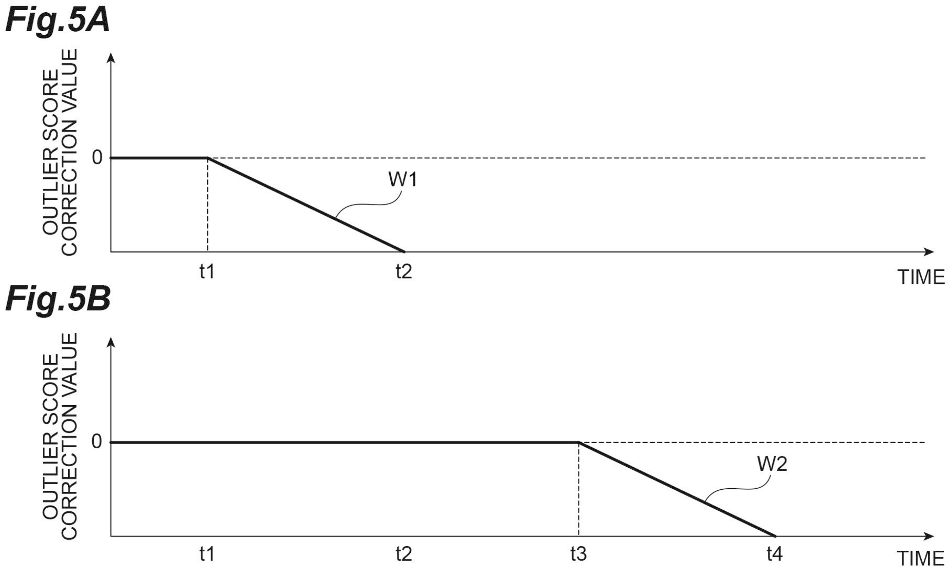

"The most recent capturing time" means the capturing time when the latest learning-candidate product is captured. At the capturing time when the latest learning-candidate product is captured, the outlier score correction value used by the determination unit 11 to determine whether the learning-candidate captured image is an outlier image is set to the outlier score correction value for the most recent capturing time (for example, -0.5). As illustrated in FIG. 5A, when a learning-candidate product is captured at time t1 to acquire a learning-candidate captured image IM6, and the latest learning-candidate product is captured at time t2 to acquire a learning-candidate captured image IM1, a graph W1 of the outlier score correction value linearly increases with a predetermined slope from time t2 to time t1 and becomes 0.0 before time t1, according to the values as in the example of FIG. 4B. As illustrated in FIG. 5B, after time t2, when a learning-candidate product is captured at time t3 to acquire a learning-candidate captured image, and the latest learning-candidate product is captured at time t4 to acquire a learning-candidate captured image, the outlier score correction value becomes smallest at the most recent capturing time t4 (for example, -0.5), and increases to 0 as the capturing time becomes sequentially older. A graph W2 of the outlier score correction value linearly increases with a predetermined slope from time t4 to time t3 and becomes 0.0 before time t3.

Note that the outlier score correction value is not limited to such an example. For example, the value may be non-linearly increased from the value at the most recent capturing time, or may not be constant at 0.0 even when the capturing time goes back. The outlier score correction value is not necessarily increased stepwise, and may be applied in a step-like manner over time, such that the outlier score is corrected to be smaller only within a time range extending into the past for a predetermined period from the most recent capturing time, and the outlier score in the past beyond the range is not corrected.

The storage unit 12 stores the first features of the learning-candidate captured image determined not to be an outlier image (to be a normal image). Each of the plurality of first features stored in the storage unit 12 is associated with a corresponding product G. The storage unit 12 can update the trained model by various methods by automatically storing the training images.

The timing at which the storage unit 12 updates the trained model may be a timing in advance performed separately from the weighing and packaging of the product using the weighing-packaging apparatus 1. Alternatively, the weighing and packaging and the update of the trained model may be performed in parallel, where, simultaneously with the weighing and packaging of the product using the weighing and packaging apparatus 1, a part of a target product G, which is a product to be weighed and packaged by the weighing and packaging apparatus 1, is treated as a learning candidate product.

The image processing unit 18 acquires features indicating characteristics of a target product G (hereinafter, referred to as "second features"). The image processing unit 18 is connected to the imaging unit 16. The image processing unit 18 may be, for example, a processor such as a CPU (Central Processing Unit) mounted in the imaging unit 16. The image processing unit 18 outputs the acquired second features to the control unit 6. The second features of the target product G are, for example, characteristics of the target product G itself, characteristics of a container on which the target product G is placed, and the like. The characteristics of the target product G itself are, for example, a shape for each area distinguished by color, an area ratio, a color tone of each area, and the like. The characteristics of the container are a size, a shape, a color, and the like of the container.

The packaging unit 3 packages the target product G conveyed by the conveyance unit 14 with a film. The packaging unit 3 covers the target product G conveyed from the weighing unit 13 with a film and packages the target product G. Specifically, the packaging unit 3 has a film conveyance mechanism 31, a lifter mechanism 32, a folding mechanism 33, and a sealing mechanism 34.

The film conveyance mechanism 31 is a mechanism that pulls out a film (not shown) for packaging the target product G from a film roll and conveys the film to a packaging position. The film pulled out from one film roll by the film conveyance mechanism 31 is held in tension at the packaging position.

The lifter mechanism 32 is a mechanism that raises the target product G to the packaging position, and pushes up the target product G against the film held in tension by the film conveyance mechanism 31. The folding mechanism 33 folds a peripheral edge of the film protruding from the target product G to a bottom surface of the target product G. The sealing mechanism 34 heat-seals an overlapping portion of the film folded by the folding mechanism 33. The packaged target product G is discharged toward the discharge table ES.

The pricing unit 4 issues a pricing label related to the target product G and attaches the pricing label to the packaged target product G. A label printer LP prints information related to the article (product information) on a label. The product information is, for example, a product name, a unit price, an additive, and the like, and the information is read from a product master 64 (a product information storage unit) of the control unit 6. A label application mechanism LI attaches the label printed by the label printer LP to the packaged target product G.

The display operation unit 5 is a mechanism (an interface) that displays product information, an imaging result of the imaging unit 16, and the like, and accepts an operation on the weighing-packaging apparatus 1 by a user. The display operation unit 5 may have a display operation portion 51 and a notification portion 52.

If features (hereinafter, referred to as "third features") transmitted from the training image storage device 10 and second features acquired from the target product G placed on the weighing unit 13 do not match, the notification portion 52 may issue a warning that these features do not match.

The control unit 6 is arranged in the main body 1a and controls the operation of each of the above-described mechanisms. Therefore, the control unit 6 is a computer having a storage medium 61 such as a ROM (Read Only Memory) in which programs, information, and the like are stored, a RAM (Random Access Memory) that temporarily stores data, and an HDD (Hard Disk Drive), a CPU, a communication circuit, and the like. The control unit 6 may include one or more circuits (circuitry) configured to realize functions of a retrieval unit 62 and a controller 63. The control unit 6 has a storage medium 61, the retrieval unit 62, the controller 63, and a product master 64. The product master 64 is a storage portion that stores product information related to a type of product. The product master 64 stores data such as unit prices and names of a plurality of types of products, and product information related to sizes, shapes, materials, tare weights, and the like of a plurality of types of trays.

The weighing-packaging apparatus 1 is configured to retrieve the target product G by a product retrieval device 100. The product retrieval device 100 includes the above-described training image storage device 10, the above-described imaging unit 16, the product master 64, and the retrieval unit 62 that retrieves product information.

The storage medium 61 stores packaging parameters for packaging the target product G. The storage medium 61 temporarily stores the third features transmitted from the training image storage device 10.

The retrieval unit 62 identifies a type of the product G and retrieves product information corresponding to the identified type of the product G, based on features of a captured image of a product G for retrieving product information (hereinafter, referred to as a "retrieval product") (hereinafter, referred to as "fourth features"). The retrieval product may be a product dedicated to retrieval, or a part of a target product (for example, a first target product among a series of target products) may be used for retrieval.

The fourth features are features indicating characteristics of a subject included in the captured image of the retrieval product. The fourth features may be acquired by the storage unit 12 using the captured image of the retrieval product captured by the imaging unit 16. The fourth features may be a vector including a predetermined number of numbers obtained via a neural network corresponding to a feature extraction layer of the trained model.

The retrieval unit 62 identifies the type of the retrieval product by, for example, applying the acquired fourth features to the trained model that has been trained using the training images, and using a product discrimination algorithm as a separation layer to output the type of the retrieval product. The retrieval unit 62, for example, sets a product corresponding to the identified type of the retrieval product as a current target product, and causes product information of the target product to be read from the product master 64 and displayed on the display operation portion 51.

The controller 63 is a main part of the control unit 6, and controls the weighing unit 13, the conveyance unit 14, the packaging unit 3, and the like. The controller 63 sets a product corresponding to the type of the retrieval product identified by the retrieval unit 62 as a current target product, and retrieves various data related to the set target product from the storage medium 61 and the product master 64, and outputs the data to the display operation unit 5, the label printer LP of the pricing unit 4, and the packaging unit 3. The controller 63 calculates a net weight and a price of the target product G based on the weighed value acquired from the weighing unit 13, and outputs them as print information to the label printer LP.

The controller 63 determines whether the placed target product G matches the current target product that has been retrieved, based on the third features and the second features. The controller 63 may determine whether to convey the target product G to the packaging unit 3 by the conveyance unit 14 based on a comparison result between the third features and the second features.

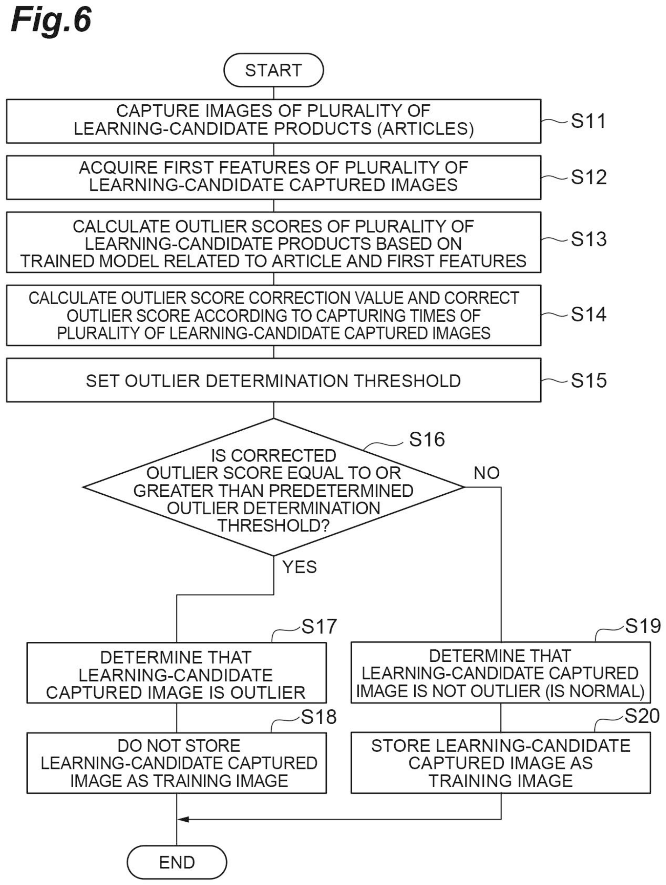

Next, a processing operation of the training image storage device 10 will be described with reference to FIG. 6. First, a plurality of learning-candidate products (articles) are captured (step S11). For example, a user manually and sequentially places a plurality of products G on the weighing unit 13 as learning-candidate products. The plurality of products G may be automatically and sequentially supplied to the weighing unit 13. The controller 63 causes the imaging unit 16 to sequentially start imaging each product G. The imaging unit 16 sequentially outputs captured images of the plurality of products G to the determination unit 11. At this time, the user may specify a retrieval number of a product corresponding to the learning-candidate product.

Next, first features of the plurality of learning-candidate captured images are acquired (step S12). The determination unit 11 acquires features of a subject included in the learning-candidate captured image. Next, outlier scores of the plurality of learning-candidate products are calculated based on the trained model related to the article and the first features (step S13). The determination unit 11, for example, applies the acquired first features to the trained model related to the product G corresponding to the retrieval number, and calculates an outlier score for each of the plurality of learning-candidate products using an outlier detection algorithm as a separation layer.

Next, an outlier score correction value is calculated and the outlier score is corrected according to capturing times of the plurality of learning-candidate captured images (step S14). The determination unit 11 calculates the outlier score correction value to be smaller as the capturing time of the learning-candidate captured image is more recent. The determination unit 11 uses the calculated outlier score correction value to calculate a corrected outlier score that is corrected according to the capturing time. Next, an outlier determination threshold is set (step S15). The determination unit 11 sets, for example, the outlier determination threshold to 0.

Next, it is determined whether the corrected outlier score is equal to or greater than the predetermined outlier determination threshold (step S16). The determination unit 11 determines whether the learning-candidate captured image is an outlier image by, for example, comparing the corrected outlier score with the outlier determination threshold.

For example, when the corrected outlier score is equal to or greater than the outlier determination threshold (step S16: YES), the determination unit 11 determines that the learning-candidate captured image is an outlier image (step S17). Then, the storage unit 12 does not store the learning-candidate captured image as a training image (step S18). Thereafter, the training image storage device 10 ends the processing operation of FIG. 6. On the other hand, when the corrected outlier score is less than the outlier determination threshold (step S16: NO), the determination unit 11 determines that the learning-candidate captured image is not an outlier image (is normal) (step S19). Then, the storage unit 12 stores the learning-candidate captured image as a training image (step S20). Thereafter, the training image storage device 10 ends the processing operation of FIG. 6.

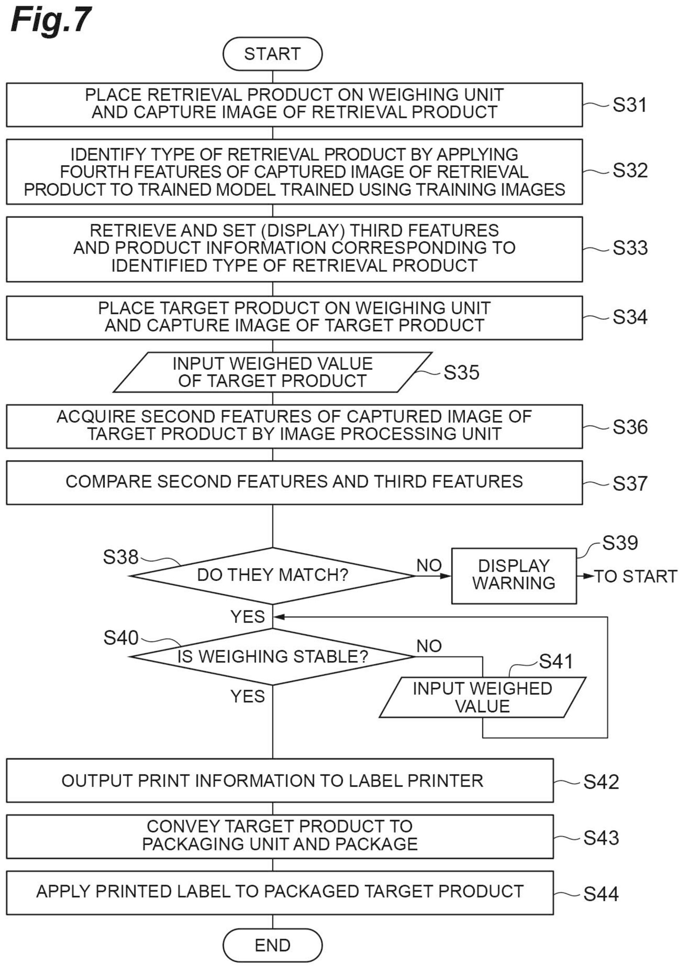

Next, a processing operation of the product retrieval device 100 will be described with reference to FIG. 7. First, a retrieval product is placed on the weighing unit, and an image of the retrieval product is captured (step S31). For example, a user manually places the retrieval product on the weighing unit 13. Next, the type of the retrieval product is identified by applying fourth features of the captured image of the retrieval product to the trained model that has been trained using the training images (step S32). The image processing unit 18 acquires fourth features indicating characteristics of a subject included in the captured image of the retrieval product. The retrieval unit 62 identifies the type of the retrieval product by, for example, applying the acquired fourth features to the trained model that has been trained using the training images, and using a product discrimination algorithm as a separation layer to output the type of the retrieval product.

Next, third features and product information corresponding to the identified type of the retrieval product are retrieved and set (displayed) (step S33). Third features corresponding to the type of the retrieval product identified by the retrieval unit 62 are read from the training image storage device 10.

Next, a target product is placed on the weighing unit, and an image of the target product is captured (step S34). For example, a user manually and sequentially places a plurality of target products on the weighing unit 13. The controller 63 inputs a weighed value of the target product output from the weighing unit 13 (step S35), and based on the weighed value, when it is determined that the target product is placed on the weighing unit 13 or that the weighed value of the target product is stable, the controller 63 causes the imaging unit 16 to start imaging the target product.

Next, second features of the captured image of the target product are acquired by the image processing unit (step S36). The imaging unit 16 outputs the captured image of the target product to the image processing unit 18. The image processing unit 18 acquires the second features of the target product from the captured image acquired by the imaging unit 16.

Next, the third features and the second features are compared by the controller 63 (step S37). When the controller 63 determines that the third features and the second features do not match (step S38: NO), a warning is displayed by the display operation unit 5 (step S39). Thereafter, the operation of the weighing-packaging apparatus 1 is ended.

When it is determined that the third features and the second features match (step S38: YES), the controller 63 determines whether the weighed value is stable. When the weighed value of the target product is not stable (step S40: NO), the weighed value is input again (step S41).

When the weighed value becomes stable (step S40: YES), the controller 63 outputs pricing data such as a net weight and a price calculated based on the stable weighed value to the label printer LP (step S42). The label printer LP creates print information based on the product information and the pricing data input in S33, and prints and issues the print information on a label.

The controller 63 drives the conveyance unit 14 to convey the target product placed on the weighing unit 13 to the packaging unit 3, and causes the target product to be packaged (step S43). The label printer LP issues a printed label, and when the packaged target product is discharged to the discharge table ES, the label application mechanism LI attaches the issued label to the packaged target product (step S44).

As described above, according to the training image storage device 10, the determination unit 11 determines whether the learning-candidate captured image is an outlier image based on the trained model related to the product G and the first features of the learning-candidate captured image. The storage unit 12 stores, as a training image, the learning-candidate captured image that is determined not to be an outlier image among a plurality of the learning-candidate captured images. Thereby, for example, each time a learning-candidate product is imaged by the imaging unit 16, the learning-candidate captured image determined not to be an outlier image is automatically and sequentially stored as a training image. Therefore, according to the training image storage device 10, a learning-candidate captured image obtained by automatically removing outlier images including noise from a plurality of captured images can be stored as a training image.

The determination unit 11 determines that the learning-candidate captured image is the outlier image when an outlier score calculated based on the trained model and the first features of the learning-candidate captured image is equal to or greater than the predetermined outlier determination threshold. The determination unit 11 calculates the outlier score to be smaller as a capturing time of the learning-candidate captured image is more recent. Thereby, the more recent the capturing time of the learning-candidate captured image, the less likely the learning-candidate captured image is to be determined to be an outlier image. This can suppress erroneously determining a learning-candidate captured image that does not actually include noise as an outlier image when only a part of the learning-candidate product has been changed to the latest specification, for example.

The product retrieval device 100 includes the above-described training image storage device 10, the imaging unit 16 configured to capture an image of the product G, the product master 64 (the product information storage unit) configured to store product information related to a type of the product G, and the retrieval unit 62 configured to retrieve the product information. The retrieval unit 62 identifies the type of the retrieval product by applying the fourth features of a captured image of the retrieval product to the trained model that has been trained using the training images. The retrieval unit 62 retrieves the product information corresponding to the identified type of the retrieval product. Thereby, for example, each time the retrieval product is imaged by the imaging unit 16, the learning-candidate captured image determined not to be an outlier image is automatically and sequentially stored as the training image. In addition, the type of the retrieval product can be identified using the trained model that has been trained using the training images.

Although one example according to one aspect of the present disclosure has been described above, one aspect of the present disclosure is not limited to the above-described example.

For example, in the above-described example, the determination unit 11 determines that the learning-candidate captured image is an outlier image when an outlier score calculated based on the trained model and the first features of the learning-candidate captured image is equal to or greater than a predetermined outlier determination threshold, but the present disclosure is not limited to this example. For example, the determination unit may determine that the learning-candidate captured image is an outlier image when a normality score calculated based on the trained model and the first features of the learning-candidate captured image is equal to or less than a predetermined normality determination threshold. In this case, the normality score may be calculated to be larger as the capturing time of the learning-candidate captured image is more recent.

In the above-described example, the determination unit 11 uses a predetermined parameter as the outlier determination threshold, but the present disclosure is not limited to this example. For example, the outlier determination threshold may be a value of the outlier score which results in a predetermined ratio of the learning-candidate captured images among the learning-candidate captured images being determined as outliers. The determination unit 11 may set the outlier determination threshold based on the calculated outlier score and the number of captured learning-candidate captured images, such that the outlier scores of a predetermined ratio of the learning-candidate captured images among the number of captured images are equal to or greater than the outlier determination threshold. In this case, for example, when an outlier occurrence rate at which a plurality of learning-candidate captured images include noise is known in advance, the determination unit 11 can automatically set the outlier determination threshold.

In the above-described example, the training image storage device 10 is configured as a part of the product retrieval device 100 in the weighing-packaging apparatus 1, but the present disclosure is not limited to this example. For example, the training image storage device may be configured as a part of a product retrieval device in a POS, a weighing device, a label issuing device, or other devices. Alternatively, the training image storage device may be used alone to store, as a training image, a captured image obtained by automatically removing outlier images including noise from a plurality of captured images. In addition, at least some of the components of the examples described above can be arbitrarily combined with each other. For example, a feature described in one example may be combined with a feature described in another example.

## Claims

1. A training image storage device configured to store training images for learning of an image related to an article, the training image storage device comprising:
an imaging unit configured to capture an image of the article; and
a determination unit configured to:
determine whether a captured image of the article is an outlier image, and
determine whether the captured image is the outlier image based on a trained model related to the article and features of the captured image;
wherein
the training image storage device further comprises a storage unit configured to store, as a training image, the captured image that is determined not to be an outlier image.

2. The training image storage device according to claim 1, wherein the determination unit is further configured to:
determine that the captured image is the outlier image when an outlier score calculated based on the trained model and the features of the captured image is equal to or greater than a predetermined outlier determination threshold, and
calculate the outlier score to be smaller as a capturing time of the captured image is more recent.

3. The training image storage device according to claim 1 or 2,
wherein the determination unit is further configured to determine that the captured image is the outlier image based on a result of a comparison between an outlier score calculated based on the trained model and the features of the captured image, and a predetermined outlier determination threshold, and
wherein the outlier determination threshold is a value of the outlier score which results in a predetermined ratio of the captured images among the captured images being determined as outliers.

4. A product retrieval device comprising:
the training image storage device according to any one of claims 1 to 3;
an imaging unit configured to capture an image of a product;
a product information storage unit configured to store product information related to a type of the product; and
a retrieval unit configured to retrieve the product information,
wherein the retrieval unit is further configured to identify the type of the product by applying features of a captured image of the product to the trained model that has been trained using the training images, and retrieve the product information corresponding to the identified type of the product.
